# EUROPEAN PATENT APPLICATION

(11) **EP 1 032 145 A2**
(43) Date of publication of application: **30.08.2000**
(21) Application number: 00301519.5
(22) Date of filing: 25.02.2000
(51) Int. Cl.: H04B 10/158

(54) **Automatic gain switching-type burst optical signal receiving circuit**

(30) Priority: 26.02.1999 JP 5198499
(71) Applicant: NEC CORPORATION, Tokyo (JP)
(72) Inventor: Yanagisawa, Hiroki, Minato-ku, Tokyo (JP)
(74) Representative: Moir, Michael Christopher

(57) **Abstract**

An automatic gain switching-type burst optical signal receiving circuit is provided in which, even when an optical signal having a large power level is inputted, waveform distortion can be suppressed effectively. An optical-signal-to-current converting means, composed of a photodiode, receives an optical signal and converts the received optical signal to a current signal Iin. A current-to-voltage converting means, which is composed of a first transimpedance amplifier, a feedback resistor unit and a first inverting amplifier, converts the current signal Iin to a voltage signal. A current monitoring means, composed of a current mirror circuit, generates a monitor current Imon by monitoring a current signal converted at the optical-signal-to-current converting means. A gain controlling means, composed of a second transimpedance amplifier, a feedback resistor, a second inverting amplifier, a peak-value detecting circuit and an operational amplifier, controls a conversion gain of said current-to-voltage converting means based on said monitor current Imon monitored at said current monitoring means so that the voltage signal outputted from said current-to-voltage converting means is not saturated.

## Description

### BACKGROUND OF THE INVENTION

The present invention relates to an automatic gain switching-type burst optical signal receiving circuit that receives optical signals from subscribers at a passive optical network (PON) system.

### Description of the Related Art

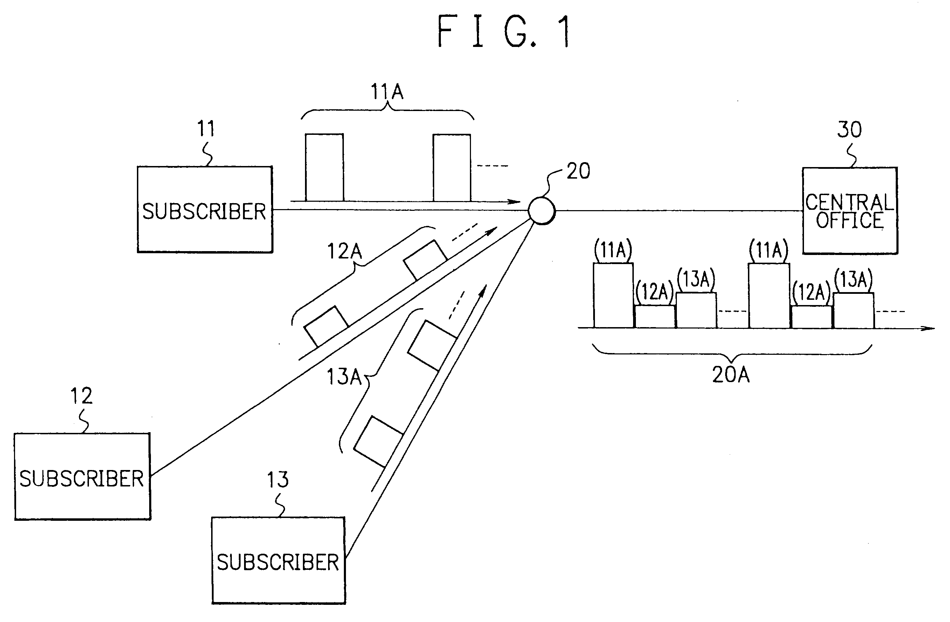

Fig. 1 is a diagram showing a whole structure of a PON system. As shown in Fig. 1, at the PON system, a time division multiplex (TDM) is applied to optical signals 11A to 13A from subscribers 11 to 13 at a repeater station 20, and the optical signals become a burst optical signal 20A and the burst optical signal is transmitted from the repeater station 20 to a central office 30 in a designated cell unit. The direction that the optical signals are transmitted from the subscribers 11 to 13 to the central office 30 via the repeater station 20 is named an upstream direction. In this case, the number of subscribers connecting to the repeater station 20 is three; however, the number is not limited to three and is set to an arbitrary number.

In this case, the transmitting distances from the subscribers 11 to 13 to the repeater station 20 are different from one another. Therefore the upstream direction burst optical signal 20A applied the TDM to the optical signals from each subscriber become a series of bursts whose power level are different from one another. In order to make an economical PON system, it is necessary to accommodate many subscribers including both near-end subscribers and far-end subscribers from the repeater station. Consequently, the difference of the power level among each burst optical signal becomes large. As a result, the burst optical signal receiving circuit installed at the side of the central station is required to have a wide dynamic range.

As a conventional burst optical signal receiving circuit, Japanese Patent Application Laid-Open No. HEI 7-147520 discloses a transimpedance-type amplifying circuit. In this application, methods, in which the gain of a transimpedance amplifier is fixed and a protecting circuit against a large input using diodes is employed, are disclosed. However, in case that a signal whose power level is large is inputted by these methods, there is a problem that a waveform distortion is

### SUMMARY OF THE INVENTION

It is therefore an object of the preferred embodiments of the present invention to provide an automatic gain switching-type burst optical signal receiving circuit, in which a gain of a current-to-voltage converting means can be switched instantly in response to a power level of a burst optical signal, and a waveform distortion can be suppressed effectively even an optical signal with a large power level is input.

According to the present invention, there is provided an automatic gain switching-type burst optical signal receiving circuit. This automatic gain switching-type burst optical signal receiving circuit includes an optical-signal-to-current converting means for receiving an optical signal and converting said received optical signal to a current signal, for example an photodiode, a current-to-voltage converting means for converting said current signal to a voltage signal, for example, composed of a transimpedance amplifier, a feedback resistor unit and an inverting amplifier, a current monitoring means for monitoring said current signal converted at said optical signal to current converting means, for example, a current mirror circuit, and a gain controlling means for controlling a conversion gain of said current to voltage converting means based on said current signal monitored at said current monitor means so that said voltage signal outputted from said current-to-voltage converting means is not saturated, for example, composed of a transimpedance amplifier, a feedback resistor, an inverting amplifier, a peak-value detecting circuit and an operational amplifier.

According to the present invention, said current-to-voltage converting means provides a transimpedance amplifier to which a current from said optical-signal-to-current converting means is inputted, a resistor for feedback provided between the input side and the output side of said transimpedance amplifier, a MOS transistor for feedback whose current route is in parallel to said resistor for feedback and whose gate voltage is controlled by said gain controlling means, and an inverting amplifier for amplifying an output signal from said transimpedance amplifier.

According to the present invention, said gain controlling means provides a transimpedance amplifier for converting said current signal monitored at said current monitoring means to a voltage signal, a feedback resistor, provided between the input side and the output side of said transimpedance amplifier, decides a gain of said transimpedance amplifier, an inverting amplifier in which said voltage signal converted at said transimpedance amplifier is amplified and inverted, a peak-value detecting circuit that detects a peak value of said amplified and inverted voltage signal at said inverting amplifier, and an operational amplifier that outputs a voltage signal in response to said peak value and controls said current-to-voltage converting means.

According to the present invention, a current signal (receiving optical signal current) generated at said optical signal to current converting means is converted to a voltage signal at said transimpedance amplifier. And said converted voltage signal is amplified by a gain decided by said feedback resistor and an on resistance value between drain and source of said MOS transistor. This gain is controlled by a voltage value between gate and source of said MOS transistor. Said receiving optical signal current is monitored at said current monitoring means, and the voltage value between gate and source of said MOS transistor for feedback is controlled by said gain controlling means in response to said monitored current amplitude. When an optical signal having large power level is inputted, the voltage value between gate and source of said MOS transistor for feedback is controlled so that the on resistance value of said MOS transistor becomes small. As a result, the gain of said transimpedance amplifier becomes small and a waveform distortion caused by inputting the large power level is prevented.

### BRIEF DESCRIPTION OF THE DRAWINGS

Preferred features of the present invention will now be described, by way of example only, with reference to the accompanying drawings, in which:-
Fig. 1 is a diagram showing a whole structure of a PON system;
Fig. 2 is a circuit diagram showing a first embodiment of an automatic gain switching type burst optical signal receiving circuit of the present invention;
Fig. 3 is a graph showing a characteristic of a MOS transistor in a feedback resistor unit for a transimpedance amplifier;
Fig. 4 is a graph showing an input/output characteristic of an operational amplifier;
Fig. 5 is a diagram showing waveforms of the first embodiment of the present invention; and,
Fig. 6 is a circuit diagram showing a second embodiment of an automatic gain switching type burst optical signal receiving circuit of the present invention.

### DESCRIPTION OF THE PREFERRED EMBODIMENTS

Referring now to the drawings, embodiments of the present invention are explained in detail. In this explanation, the same elements in the embodiments have the same reference numbers.

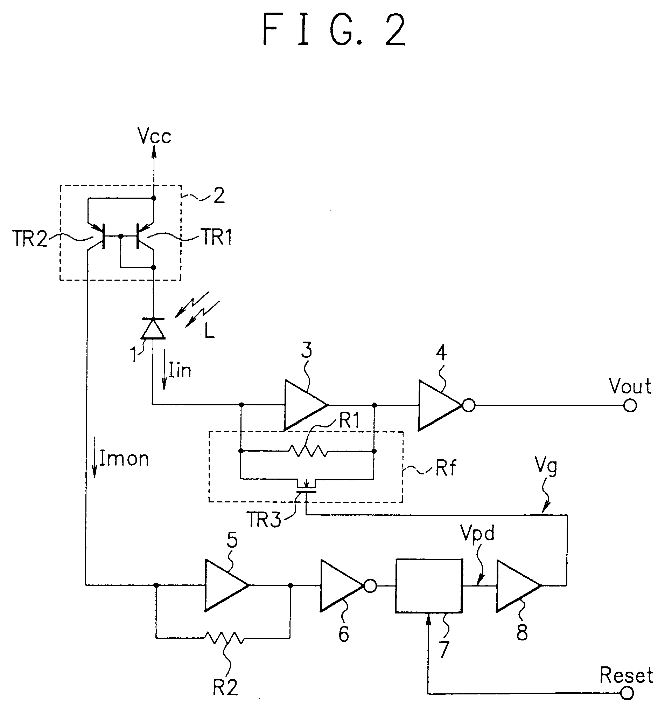

Fig. 2 is a circuit diagram showing a first embodiment of the automatic gain switching-type burst optical signal receiving circuit of the present invention. As shown in Fig. 2, the first embodiment of the automatic gain switching type burst optical signal receiving circuit of the present invention consists of a photodiode 1, a current mirror circuit 2, a first transimpedance amplifier 3, a first inverting amplifier 4, a second transimpedance amplifier 5, a second inverting amplifier 6, a peak-value detecting circuit 7, an operational amplifier 8, a feedback resistor unit Rf and a feedback resistor R2.

The photodiode 1 receives an optical signal L and converts the received optical signal L to a receiving optical signal current Iin. The current mirror circuit 2 consists of PNP type transistors TR1 and TR2, and emitters of the PNP-type transistors TR1 and TR2 are connected, and a reverse bias voltage Vcc is applied to the emitters of the PNP-type transistors TR1 and TR2. The reverse bias voltage Vcc is also applied to a cathode of the photodiodel via the PNP-type transistor TR1. Bases of these PNP-type transistors TR1 and TR2 are connected to a collector of the PNP-type transistor TR1.

At this current mirror circuit 2, a collector current Imon of the PNP-type transistor TR2 always becomes equal to a collector current of the PNP-type transistor TR1, that is, the receiving optical signal current Iin of the photodiode 1, and the receiving optical signal current Iin can be monitored by the collector current Imon of the PNP-type transistor TR2.

The first transimpedance amplifier 3 converts the receiving optical signal current Iin obtained at the photodiode 1 to a voltage signal. The feedback resistor unit Rf connected in parallel with the first transimpedance amplifier 3 is provided between the input side and the output side of the first transimpedance amplifier 3. The feedback resistor unit Rf consists of a resistor R1 and a MOS transistor TR3, and the MOS transistor TR3 is connected in parallel with the resistor R1. The feedback resistor unit Rf is a feedback resistor that decides a gain of the first transimpedance amplifier 3. And the resistance value of the feedback resistor unit Rf is decided by the parallel resistance value of the resistance value between source and drain of the MOS transistor TR3 and the resistor R1.

The first inverting amplifier 4 inverts the output signal from the first transimpedance amplifier 3, and outputs the inverted signal as a voltage signal Vout to an external instrument. The second transimpedance amplifier 5 converts the collector current Imon of the PNP-type transistor TR2 to a voltage signal. The R2 is a feedback resistor deciding the gain of the second transimpedance amplifier 5, and the value of the TR2 is set as a smaller value than the R1.

The second inverting amplifier 6 inverts and amplifies the output signal from the second transimpedance amplifier 5. The peak-value detecting circuit 7 detects a peak value Vpd of the outputted signal from the second inverting amplifier 6. A reset signal Reset is inputted to the peak-value detecting circuit 7 from the outside, and after every finish of inputting the burst signal, the peak value Vpd is made to reset. The operational amplifier 8 outputs a signal Vg in response to the level of the peak value Vpd to the gate of the MOS transistor TR3 and controls the gate voltage of the MOS transistor TR3.

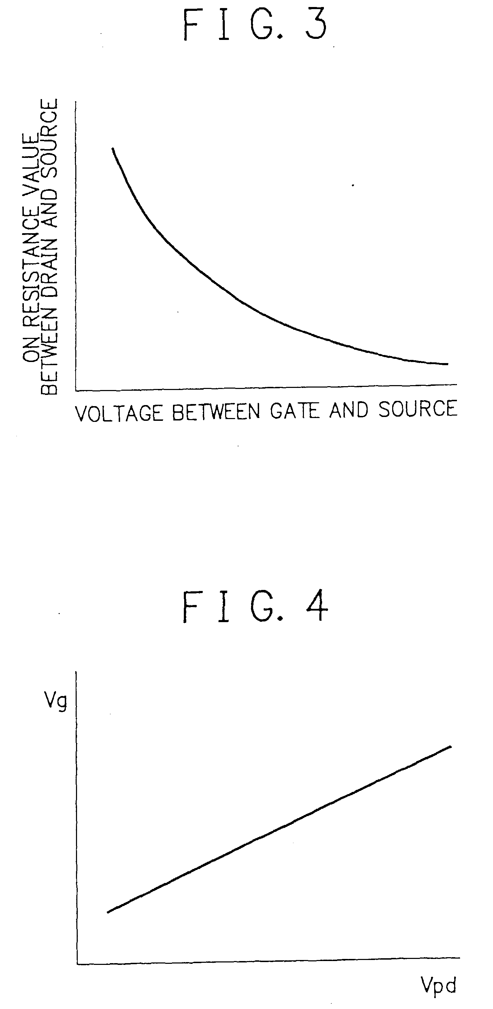

Fig. 3 is a graph showing a characteristic of the MOS transistor TR3 in the feedback resistor unit Rf for the first transimpedance amplifier 3. In this, the characteristic shows the relation a voltage between gate and source for an on resistance value between drain and source. As shown in Fig. 3, generally a N-channel-type MOS transistor has a characteristic that the resistance value between drain and source becomes small when the voltage between gate and source is made to be large. Therefore, the resistance value between drain and source of the MOS transistor TR3 is controlled by controlling the voltage between gate and source of the MOS transistor TR3. As a result, the resistance value of the feedback resistor unit Rf is controlled and the conversion gain of the first transimpedance amplifier 3 is controlled.

Fig. 4 is a graph showing an input/output characteristic of the operational amplifier 8. As shown in Fig. 4 for the operational amplifier 8, an output Vg for an input peak value Vpd has a linear characteristic. And the gradient and offset voltage are set beforehand so that the voltage between gate and source Vg becomes optimal for the peak value Vpd.

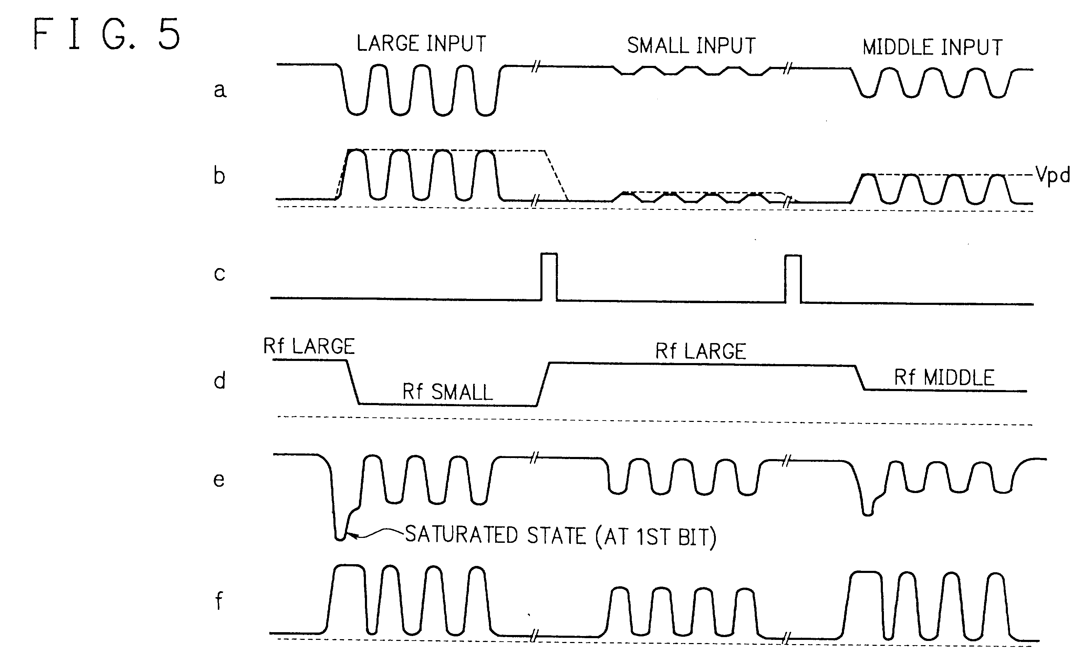

Next, an operation of the automatic gain switching type burst optical signal receiving circuit of the present invention is explained. Fig. 5 is a diagram showing waveforms of the first embodiment of the present invention. Referring to Fig. 5, the operation of the first embodiment of the present invention is explained. In Fig. 5, " a " shows an output waveform of the second transimpedance amplifier 5, and at " b ", the continuous line shows an output waveform of the second inverting amplifier 6 and the dotted line shows an output waveform of the peak value detecting circuit 7, " c " shows the waveform of the reset signal Reset inputting to the peak value detecting circuit 7, " d " shows the value of the feedback resistor unit Rf for the first transimpedance amplifier 3, " e " shows an output waveform of the first transimpedance amplifier 3, and " f " shows an output waveform of the first inverting amplifier 4.

First, the photodiodel receives the optical signal L and converts the received optical signal L to the receiving optical signal current Iin. As a result, the receiving optical signal current Iin is made to be the collector current of the PNP-type transistor TR1 being one of the TRs in the current mirror circuit 2. And at the collector of the PNP-type transistor TR2 being the other of the TRs in the current mirror circuit 2, the monitor current Imon,being the collector current of the TR2, which is equal to the receiving optical signal current Iin, appears.

The monitor current Imon from the current mirror circuit 2 is inputted to the second transimpedance amplifier 5, and the second transimpedance amplifier 5 converts the monitor current Imon to a voltage signal. As shown in Fig. 5, the output waveform " a " from the second transimpedance amplifier 5 becomes a waveform whose polarity is inverted to the monitor current Imon inputting to the second transimpedance amplifier 5. The gain of the second transimpedance amplifier 5, which is decided by the feedback resistor R2, is set to be a value that the output signal is not saturated even when a large signal is inputted. With this, the second transimpedance amplifier 5 amplifies linearly the amplitude of the monitor current Imon.

The second inverting amplifier 6 inverts the output signal from the second transimpedance amplifier 5 and outputs a signal shown at the continuous line of the waveform " b ". The peak value detecting circuit 7 detects the peak value Vpd of the output signal from the second transimpedance amplifier 5 within one bit. As shown in the dotted line of the waveform " b ", the peak value detecting circuit 7 keeps the value during the burst interval decided by the reset signal Reset. In this, the reset signal Reset is shown in the waveform " c ". The kept peak value Vpd is initialized every burst cycle by the reset signal Reset shown in the waveform " c ".

The output signal from the peak value detecting circuit 7 shown in the dotted line of waveform " b " is inputted to the operational amplifier 8. The operational amplifier 8 inverts the inputted signal and gives the voltage between gate and source Vg being the inverted signal to the gate of the MOS transistor TR3 in the feedback resistor unit Rf. As shown in the waveform " d ", the larger the voltage between gate and source Vg is, the smaller the value of the feedback resistor unit Rf becomes, and the smaller the voltage between gate and source Vg is, the larger the value of the feedback resistor unit Rf becomes. In this, this voltage between gate and source Vg is obtained by inverting the peak value Vpd. This peak value Vpd shows the size of the monitor current Imon, that is, the receiving optical signal current Iin, therefore, the larger the receiving optical signal current Iin (the inputting level of the received optical signal L), the smaller the value of the feedback resistor unit Rf becomes, on the contrary, the smaller the receiving optical signal current Iin, the larger the value of the feedback resistor unit Rf becomes. And when the reset signal Reset is inputted, the value of the feedback resistor unit Rf is made to initialize to be the maximum value.

On the other hand, the polarity of the output waveform " e " of the first transimpedance amplifier 3 is inverted to the receiving optical signal current Iin inputting to the transimpedance amplifier 3, this is similar to the output waveform " a " of the second transimpedance amplifier 5. In this, when a large receiving optical signal current Iin is inputted to the first transimpedance amplifier 3, the first transimpedance amplifier 3 receives this optical signal at a state that the first transimpedance amplifier 3 is in the maximum gain, as a result, the first bit signal reaches to the saturation state; however, this large optical signal is reflected to the monitor current Imon and the feedback resistor unit Rf is controlled to a small value at once. With this, on and after the second bit, a normal waveform can be obtained. And when a small receiving optical signal current Iin is inputted to the first transimpedance amplifier 3, this small optical signal is reflected to the monitor current Imon and the feedback resistor unit Rf is controlled to a large value (the maximum value) at once. Therefore, a normal waveform is outputted from the first bit.

The first inverting amplifier 4 inverts the output signal from the first transimpedance amplifier 3, and outputs a signal Vout shown in the waveform " f ". In this waveform " f ", at the first bit in the large signal or the middle signal, the pulse width of the first bit is wide,caused by the saturation; however, a normal waveform can be obtained on and after the second bit.

As mentioned above, at the first embodiment of the present invention, the gain of the first transimpedance amplifier 3, to which the receiving optical signal current is inputted, is switched in response to the power level of the receiving optical signal. Therefore, even when the power level of the optical signal L becomes large, a series of signals having low distortion can be obtained. And on the contrary, even when the power level of the optical signal L becomes small, a series of signals having required amplitude can be obtained.

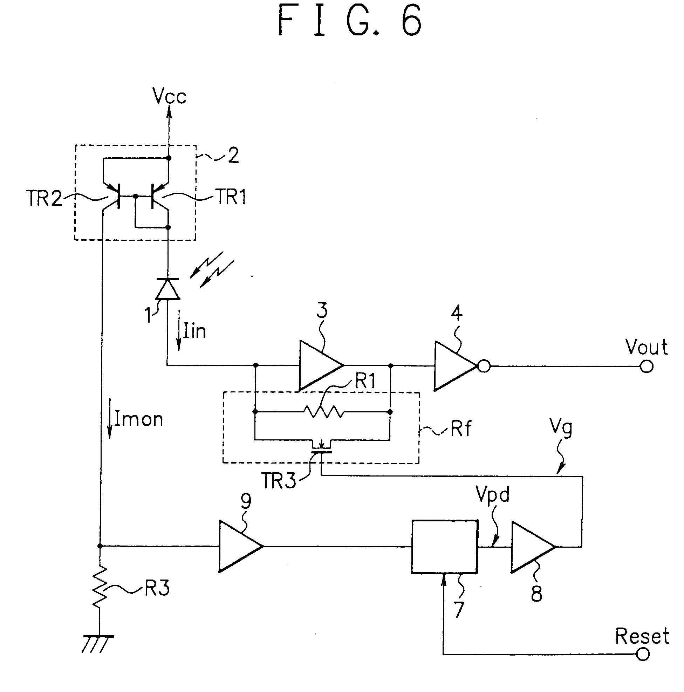

Next, a second embodiment of the present invention is explained. Fig. 6 is a circuit diagram showing the second embodiment of the automatic gain switching type burst optical signal receiving circuit of the present invention. At the second embodiment shown in Fig. 6, the circuit structure for main signal composed of the photodiodel, the current mirror circuit 2, the first transimpedance amplifier 3 and the first inverting amplifier 4 is the same as the structure of the first embodiment shown in Fig. 2. The second embodiment of the present invention shown in Fig. 6 is different from the first embodiment shown in Fig. 2 in an amplifying means for the monitor current Imon.

In the first embodiment mentioned above, the amplifying means for the monitor current Imon provides the second transimpedance amplifier 5, the feedback resistor R2 and the second inverting amplifier 6. However, in the second embodiment, the amplifying means for the monitor current Imon provides a resistor R3 whose one end is connected to the collector of the PNP-type transistor TR2 in the current mirror circuit 2 and whose other end is grounded, and a non-inverting amplifier 9 whose one end is connected to the one end of the resistor R3 and whose other end is connected to the peak-value detecting circuit 7. And a voltage signal generated at the resistor R3 is directly monitored in the second embodiment.

In this structure, the voltage signal generated at the resistor R3 is inputted to the peak-value detecting circuit 7 via the non-inverting amplifier 9. The peak-value detecting circuit 7 detects and keeps the peak value Vpd as the same as the first embodiment, and the resistance value of the feedback resistor unit Rf is controlled in response to this peak value Vpd.

Therefore, at the second embodiment, only one transimpedance amplifier in the whole circuit is required, as a result, the circuit structure can be simplified. Especially in the case where strict accuracy for the gain control is not needed, this circuit structure is effective.

Based on the explanations mentioned above, according to the embodiments of the present invention, the following effects can be obtained. First, the gain of the amplifier can be switched instantly (within one bit) in response to the inputting power level. The reason is that the input current is directly monitored and the gain is switched by the control of feedforward gain control structure, as a result, the oscillation caused by the high-speed response is not considered.

Second, the receiving dynamic range can be expanded easily. The reason is that even when a very large power level signal is inputted, the gain of the first stage amplifier is controlled to decrease, and the waveform distortion caused by the saturation can be prevented. Especially, at a DC-coupling-type circuit used frequently at the burst optical signal receiving circuit, when an optical signal having input offset is inputted, the waveform distortion caused by the saturation is liable to occur; therefore,this effect is usable.

Third, even though burst optical signals whose input power levels are different are input in turn, normal receiving can be performed. The reason is that the circuit is initialized every burst cycle by the reset signal.

The embodiments of the present invention have been explained above. However, the present invention is not limited to those embodiments; the present invention is usable for other applications without departing from the scope of the present invention. For example, in the embodiments mentioned above, the current mirror circuit is used to generate the monitor current equal to the receiving optical signal current, and the feedback resistor is controlled. However, this is not limited to the current mirror circuit; for example, a photodiode for monitoring having an equal characteristic to the photodiode 1 can be provided, and a receiving optical signal current obtained by this photodiode for monitoring can be monitored and a feedback resistor can be controlled.

And in the embodiments mentioned above, the resistor R1 and the MOS transistor TR3 for feedback are connected in parallel; however, the resistor R1 can be used as an auxiliary function working in the case that the MOS transistor is cutoff. And as the MOS transistor, for example, a depletion-type can be used, and the resistor R1 can be eliminated.

As mentioned above, according to the present invention, an optical signal is received and the received optical signal is converted to a current signal, and the current signal is converted to a voltage signal, and the current signal is monitored, and a conversion gain of a current-to-voltage converting means is controlled based on the monitored current signal so that the voltage signal is not saturated. Therefore, the gain of the current-to-voltage converting means (transimpedance amplifier) can be switched instantly in response to the power level of a burst optical signal, and even when an optical signal having large power level is inputted, an automatic gain switching-type burst optical signal receiving circuit, in which the waveform distortion is suppressed effectively, can be obtained.

While the present invention has been described with reference to the particular illustrative embodiments, it is not to be restricted by those embodiments but only by the appended claims. It is to be appreciated that those skilled in the art can change or modify the embodiments without departing from the scope of the present invention.

Each feature disclosed in this specification (which term includes the claims) and/or shown in the drawings may be incorporated in the invention independently of other disclosed and/or illustrated features.

The text of the abstract filed herewith is repeated here as part of the specification.

An automatic gain switching-type burst optical signal receiving circuit is provided in which, even when an optical signal having a large power level is inputted, waveform distortion can be suppressed effectively. An optical-signal-to-current converting means, composed of a photodiode, receives an optical signal and converts the received optical signal to a current signal Iin. A current-to-voltage converting means, which is composed of a first transimpedance amplifier, a feedback resistor unit and a first inverting amplifier, converts the current signal Iin to a voltage signal. A current monitoring means, composed of a current mirror circuit, generates a monitor current Imon by monitoring a current signal converted at the optical-signal-to-current converting means. A gain controlling means, composed of a second transimpedance amplifier, a feedback resistor, a second inverting amplifier, a peak-value detecting circuit and an operational amplifier, controls a conversion gain of said current-to-voltage converting means based on said monitor current Imon monitored at said current monitoring means so that the voltage signal outputted from said current-to-voltage converting means is not saturated.

## Claims

1. An automatic gain switching type burst optical signal receiving circuit, comprising:
an optical signal to current converting means for receiving an optical signal and converting said received optical signal to a current signal;
a current to voltage converting means for converting said current signal to a voltage signal;
a current monitoring means for monitoring said current signal converted at said optical signal to current converting means; and
a gain controlling means for controlling a conversion gain of said current to voltage converting means based on said current signal monitored at said current monitor means so that said voltage signal outputted from said current to voltage converting means is not saturated.

2. An automatic gain switching type burst optical signal receiving circuit in accordance with claim 1, wherein:
said current to voltage converting means comprises:
a transimpedance amplifier to which a current from said optical signal to current converting means is inputted;
a resistor for feedback provided between the input side and the output side of said transimpedance amplifier;
a MOS transistor for feedback whose current route is in parallel to said resistor for feedback and whose gate voltage is controlled by said gain controlling means; and
an inverting amplifier for amplifying an output signal from said transimpedance amplifier.

3. An automatic gain switching type burst optical signal receiving circuit in accordance with claim 1, wherein:
said gain controlling means comprises:
a transimpedance amplifier for converting said current signal monitored at said current monitoring means to a voltage signal;
a feedback resistor, provided between the input side and the output side of said transimpedance amplifier, for deciding a gain of said transimpedance amplifier;
an inverting amplifier in which said voltage signal converted at said transimpedance amplifier is amplified and inverted;
a peak value detecting circuit that detects a peak value of said amplified and inverted voltage signal at said inverting amplifier; and
an operational amplifier that outputs a voltage signal in response to said peak value and controls said current to voltage converting means.

4. An automatic gain switching type burst optical signal receiving circuit in accordance with claim 1, wherein:
said gain controlling means comprises:
a resistor that generates a voltage signal from said current signal monitored at said current monitoring means;
a non-inverting amplifier in which said voltage signal generated at said resistor is amplified;
a peak value detecting circuit that detects a peak value of said amplified voltage signal at said non-inverting amplifier; and
an operational amplifier that outputs a voltage signal in response to said peak value and controls said current to voltage converting means.
